(19) Europäisches Patentamt
European Patent Office
Office européen des brevets

(11) Veröffentlichungsnummer: **0 364 581**
**A1**

(12) # EUROPÄISCHE PATENTANMELDUNG veröffentlicht nach Art. 158 Abs. 3 EPÜ

(21) Anmeldenummer: **88905465.6**

(51) Int. Cl.5: **A01N 37/08 , A01N 37/10 , A01N 37/36**

(22) Anmeldetag: **17.03.88**

(86) Internationale Anmeldenummer:
**PCT/SU88/00057**

(87) Internationale Veröffentlichungsnummer:
**WO 89/08396 (21.09.89 89/23)**

(43) Veröffentlichungstag der Anmeldung:
**25.04.90 Patentblatt 90/17**

(84) Benannte Vertragsstaaten:
**CH DE FR GB IT LI**

(71) Anmelder: **VSESOJUZNY NAUCHNO-ISSLEDOVATELSKY INSTITUT SELSKOKHOZAISTVENNOI BIOTEKHNOLOGII VSESOJUZNOI AKADEMII SELSKOKHOZYAISTVENNYKH NAUK IMENI V.I. LENINA**
**ul. Pskovskaya 12-4 Moscow, 127253(SU)**

Anmelder: **INSTITUT BIOORGANICHESKOI KHIMII IMENI M.M. SHEMYAKINA AKADEMII NAUK SSR**
**ul. Miklukho-Maklaya, 16/10**
**Moscow, 117871(SU)**

(72) Erfinder: **FEDIN, Marat Alexandrovich**
**ul. Dm.Ulyanova, 24-158**
**Moscow, 107078(SU)**
Erfinder: **KUZNETSOVA, Tatyana Alexandrovna**
**Khoroshevskoe shosse, 36b-62**
**Moscow, 123007(SU)**
Erfinder: **NOVIKOVA, Svetlana Alexandrovna**
**ul. Shirokaya, 19-2-176**
**Moscow, 129224(SU)**
Erfinder: **GRAMENITSKAYA, Vera Nikolaevna**
**pr. Vernadskogo, 11-110**
**Moscow, 117311(SU)**
Erfinder: **BERZIN, Valery Bennovich**
**ul. Tsjurupy, 7-2-59**
**Moscow, 117418(SU)**
Erfinder: **LUKOSHINA, Nina Ivanovna**
**ul. Profsojuznaya, 114-6-834**
**Moscow, 117437(SU)**
Erfinder: **EGOROV, Ivan Vasilievich**
**6 Novopodmoskovny per., 6-30**
**Moscow, 125130(SU)**
Erfinder: **VULFSON, Nikolai Sigizmundovich**
**ul. Novatorov, 36-9-123**
**Moscow, 117421(SU)**
Erfinder: **KOZMINA, Elena Alexeevna**
**ul. Profsojuznaya, 114-6-905**
**Moscow, 117437(SU)**
Erfinder: **VOSKOBOINIK, Leonid Konstantinovich**
**ul. Pushkina, 35-6**
**Krasnodar, 350023(SU)**
Erfinder: **FEDORENKO, Tatyana Sergeevna**
**ul. Shkolnaya, 11-23**
**Krasnodar, 350038(SU)**
Erfinder: **PROKOPENKO, Alexandra Ivanovna**
**ul. Peredovaya, 74-24**
**Krasnodar, 350038(SU)**
Erfinder: **GERASIMOVA, Nadezhda Egorovna**
**ul. Musy Dzhalilya, 4-2-369**
**Moscow, 115573(SU)**
Erfinder: **SAVCHUK, Valentin A.**
**Opytnaya stantsia VIR Globinsky raion**
**Poltavskaya obl. selo Ustimovka, 315967(SU)**
Erfinder: **PAKLIN, Sergei Ivanovich**
**ul. Malaya Filevskaya, 66-30**
**Moscow, 121433(SU)**
Erfinder: **BASIN, Igor Samuilovich**
**ul. Shepilovskaya, 42/30-73**
**Moscow, 115563(SU)**

(74) Vertreter: **von Füner, Alexander, Dr.**
**Patentanwälte v. Füner, Ebbinghaus, Finck**

Mariahilfplatz 2 & 3 | D-8000 München 90(DE)

## (54) VERFAHREN ZUR STERILISATION VON PFLANZLICHEN POLLEN.

(57) Das Verfahren zur Sterilisation von Staubbeuteln der Pflanzen schließt die Behanlung von Pflanzen mit einem Sterilisationsmittel in Verbindung mit einem Verdünner in der fünften und/oder sechsten Periode der Organogenese ein. Als Sterilisationsmittel dienen erfindungsgemäß Karbonsäurederivate der allgemeinen Formel A - COOR, worin R für K, Na, $NH_4$, Alkyl mit 1 bis 6 Kohlenstoffatomen, Allyl steht,

A =

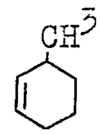

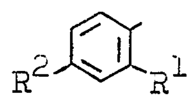

bedeutet, worin $R^1$ für COOH, COOR, H, OH, $R^2$ für H, OH steht, oder deren Gemische.

# VERFAHREN ZUR STERILISATION DER STAUBBEUTEL VON PFLANZEN

## Technisches Gebiet

Die vorliegende Erfindung bezieht sich auf die Biologie und Landwirtschaft, insbesondere auf ein Verfahren zur Sterilisation der Staubbeutel von Pflanzen, welches in der Selektion und im Samenbau zur Verwendung kommt.

## Zugrundeliegender Stand der Technik

Heute wird in der Welt die Aufgabe, die Landwirtschaft zu intensivieren, insbesondere die Ertragsfähigkeit von Getreide-, Futter-, Gemüse- und technischen Kulturen durch breite Verwendung von Hybriden der ersten Generation zu steigern, gelöst. Wegen ihrer Hybridkraft unterscheiden sich die Hybride von den Elternformen in einer höheren Leistung (um 25 bis 30%) und einer besseren Produktqualität. Es besteht ein Verfahren zur Erzeugung von neuen Hybriden, welches auf einem System "zytoplasmatische Pollensterilität - Rosterer der Fertilität" beruht. Diesem Verfahren liegt eine fortwährende (innerhalb von 12 bis 14 Jahren) und komplizierte Selektionsarbeit zugrunde, die das Schaffen von sterilen Analoga, Fixatoren der Sterilität und Restorern der Fertilität umfaßt. Besonders aussichtsreich sind Verfahren, die auf der Sterilisation der Staubbeutel von Pflanzen mit chemischen Sterilisationsmitteln (Gametoziden basieren. Die Verwendung von Gametoziden ist bedeutend wirtschaftlicher als die des Systems "zytoplasmatische Pollensterilität", weil die Notwendigkeit entfällt, solche Formen wie steriles Analogon, Analogon für die Fixierung der Sterilität bei mütterlichen Formen für die Restauration der Fertilität bei väterlichen Formen zu erzeugen. Man kann praktisch die Samen von Hybriden der ersten Generation sowohl im Laufe der Selektionsforschung von Ausgangsformen als auch bei der Organisation ihrer technischen Herstellung gewinnen.

Zur Zeit sind etwa 200 Verbindungen gefunden, welche eine gametozide Aktivität besitzen und ihrer chemischen Struktur nach zu verschiedenen Klassen von chemischen Verbindungen gehören. Gametozide müssen die volle Pollensterilität bei behandelten Pflanzen unter Erhaltung der Lebensfähigkeit von Eizellen bewirken und eine ausreichend hohe

Fähigkeit (wünschenswert mindenstens 70% der Kontrolle), den Fruchtknoten unter freier Bestäubung zu bilden, sicherstellen. Die Werte ihrer Phytotoxizitat und Toxizität für Warmblüter müssen minimal sein.

Bekannt sind Verfahren zur Sterilisation der Staubbeutel von Getreidekulturen (L.Dzh. Nikell. Regulatory rosta rasteny. Primenenie v selskom khozyaistve. Moskva, izdatelstvo "Kolos", 1984, S. 28-31; SU, A, 906457. L.J. Nikell. Wachstumsregulatoren von Pflanzen. Anwendung in der Landwirtschaft. Moskau, Verlag "Kolos", 1984, S. 28-31), welche in der Behandlung von Pflanzen mit Sterilisationsmitteln wie 2-Chloräthylphosphonsäure (Ethrel), Maleinsäurehydrazid, Di-(polyfluoralkyl)-phosphorsäuren und ihre Salze u.a. bestehen. Die Behandlung der Pflanzen mit einheimischen Sterilisationsmitteln erfolgt in der V. und/oder VI. Periode der Organogenese (nach F. M. Kupermann).

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Staubblättern, Stempel und Blütenhülle. In der V. Periode tritt die Differenzierung des Höckers von Staubblättern in Staubfaden und Stempel in Erscheinung. Die VI.Periode ist durch Ablauf der Prozesse der Blütenbildung (Mikro- und Makrosporogenese) gekennzeichnet. In dieser Periode werden gesonderte einkernige Pollenkörner gebildet (F.M.Kupermann. Morfofiziologia rasteny. Moskva, izdatelstvo "Vysshaya shkola", 1973, S.S,30-36. Morphophysiologie von Pflanzen. Moskau, Verlag "Vysshaya shkola", 1973, S.S.30-36).

Bekannt ist weiter ein Verfahren zur Sterilisation der Staubbeutel von Graspflanzen (GB, A, 1567153), das darin besteht, daß man die Behandlung von Graspflanzen mit einem Sterilisationsmittel in der Periode durch führt, die zwischen Auftreten des zweiten Stengelglieds und Ährenschieben liegt. Als Sterilisationsmittel verwendet man heterozyklische Verbindungen, deren Hauptvertreter 2-Karboxy-3,4-methanpyrrolidin oder 2-Methoxykarbonyl-3,4-methanpyrrolidin sind. Die angegebenen Verbindungen werden in Verbindung mit

Verdünnungsmitteln und oberflächenaktiven Stoffen eingesetzt.

Offenbarung der Erfindung

Die Erfindung liegt die Aufgabe zugrunde, durch die Wahl von Sterilisationsmitteln ein Verfahren zu entwickeln, welches zur Sterilisation der Staubbeutel eines breiten Spektrums von Kulturen mit hohem Sterilisationsgrad unter Erhaltung der hohen Fühigkeit von Samen, Fruchtansätze bei freier Bestäubung zu bilden, geeignet werden kann.

Diese Aufgabe wird dadurch gelöst, daß im vorgeschlagenen Verfahren zur Sterilisation der Staubbeutel von Pflanzen durch ihre Behandlung mit einem Sterilisationsmittel in Verbindung mit einem Verdünner in der fünften und/oder sechsten Periode der Organogenese erfindungsgemäß als Sterilisationsmittel Karbonsäurederivate der allgemeinen Formel A-COOR, dienen,
worin R für K, Na, $NH_4$, Alkyl mit 1 bis 6 Kohlenstoffatomen, Allyl steht,

A 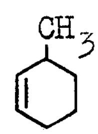 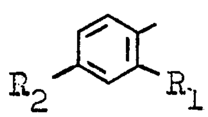 bedeutet,

worin $R_1$ = COOH, COOR, H, OH ist;
$R_2$ für H, OH steht, oder Gemische derselben verwendet.

Das Sterilisationsmittel kann in Verbindung mit einem beliebigen bekannten und dazu geeigneten Verdünner verwendet werden. Es ist zweckmäßigerweise in Kombination mit Wasser als 0,01%ige wäßrige Emulsion zu benutzen. Als Pflanzen, die mit angegebenen Sterilisationsmittel behandelt werden, dienen bevorzugt Graspflanzen oder Sonnenblume.

Das erfindungsgemäße Verfahren ermöglicht, die männliche Sterilität von Pflanzen (98-100%) zu erzielen und eine hohe Fähigkeit zur Samenbildung (über 70%) zu erhalten. Zwecks Erzielung des hohen Sterilisationsgrades von Staubbeuteln unter ungünstigen Klimabedingungen wird die Behandlung von Pflanzen mit dem Sterilisationsmittel der fünften und/oder sechsen Periode der Organogenese (nach Kupermann) wiederholt.

Beste Ausführungsform der Erfindung

Das erfindungsgemäße Verfahren wird wie folgt durchgeführt.

Pflanzen wie z.B. Winter- und Sommerweizen, diploider und tetraploider Roggen, Tritikale, Hirse, Sonnenblume u.a. werden mit einem Sterilisationsmittel behandelt, wobei als solches Karbonsäurederivate verwendet werden.

Derivate der Karbonsäuren können in Verbindung mit beliebigen geeigneten Verdünnern verwendet werden, als Verdünner ist Wasser zweckmäßigerweise zu benutzen. Dabei ist 0,01- bis 2%ige wäßrige Emulsion der angegebenen Verbindungen vorteilhaft zu verwenden.

Man kann den gebrauchsfertigen Lösungen beliebige geeignete oberflächenaktive Stoffe wunschgemäß zusetzen. Beim Aufbringen auf die Pflanzen sind gewöhnlich den gebrauchsfertigen Lösungen beliebige bekannte Hilfsmittel wie Netzmittel, Dispergiermittel und Adhäsionsmittel zweckmäßigerweise hinzuzufügen.

Das Sterilisationsmittel läßt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Dosis des Sterilisationsmittels hängt von der Natur der Verbindung, von zu behandelnder Kultur, Behandlungsperiode und natürlichen Klimafaktoren ab. Um den hohen Sterilisationseffekt unter ungünstigen Klimabedingungen sicherzustellen, ist es zweckmäßig, die wiederholte Behandlung von Pflanzen in der VI. Periode der Organogenese durchzuführen. Die Gesamtdosis des Sterilisationsmittels beträgt 0,6 bis 20 kg/ha.

Alle erfindungsgemäßen Karbonsäurederivate, die als Sterilisationsmittel zur Verwendung kommen, waren auf die akute Toxizität im Tierversuch geprüft. Die Prüfergebnisse haben ergeben, daß die angegebenen Verbindungen von schwacher oder mittlerer Toxizität sind. So beträgt, beispielsweise, $LD_{50}$ bei Phthalsäuredibutylester für weiße Mäuse bei der einmaligen Einführung in den Magen 2838 mg/kg Tiergewicht und für weiße Ratten 6669 mg/kg Tiergewicht, $LD_{50}$ bei Kaliumsalz der 2-Methyl-3-zyklohexenkarbonsäure-

beträgt für weiße Ratten 7664 mg/kg Tiergewicht.

Die gametozide Aktivität der erfindungsgemäßen Sterilisationsmittel war in Feldversuch in verschiedenen bodenklimatischen Zonen mit Teilstücken von 10 $m^2$ Größe in drei- bis viermaliger Wiederholung nachgewiesen. Jedes Sterilisationsmittel wurde mindestens 5 Jahre lang geprüft.

Die Entwicklung der Perioden der Organogenese wird zytologisch überwacht. Die Behandlung von Pflanzen mit dem Sterilisationsmittel erfolgt am Anfang der fünften Periode der Organogenese nach Kupermann.

Mit dem Ährenschieben verwirklicht man die Isolierung von Hauptähren und anderen Stockwerken in Pergamentbeuteln. Bei Weizen und Tritikale werden Einzelisolatoren verwendet. Bei Roggen schließt man je 1 Ähre von 5 bis 7 verschiedenen nebeneinander befindlichen Pflanzen in einen gemeinsamen Isolator ein. Bei Hirse wird jede Rispe getrennt isoliert. Der Sterilitätsprozentsatz (X) für Weizen, Roggen, Tritikale und Hirse wird nach der Formel

$$X = I - \frac{\text{Anzahl der in einem Isolator befruchteten Samen von behandelten Pflanzen}}{\text{Anzahl der in einem Isolator befruchteten Samen von unbehandelten Kontrollpflanzen}} \times 100\%$$

ermittelt.

Die Kornzahl in nicht isolierten Ähren von Kontrollpflanzen wird bedingt für 100% Ansetzen bei freier Bestäubung angenommen.

Um zuverlässige Angaben zu erhalten, verwendet man 20 bis 25 Isolatoren jeder Wiederholung für Weizen und Tritikale, 10 bis 15 Isolatoren jeder Wiederholung für Roggen und Hirse.

Zur Kontrolle der chemischen Sterilisation des Sonnenblumenpollens werden für jede Verbindung 45 behandelte Pflanzen jeder Wiederholung benutzt, wobei 15 Pflanzen zwecks Selbsbestäubung isoliert werden, Blutenkörbchen von 15 anderen Pflanzen mit einem Pollengemisch, gesammelt von 20 bis 25 behandelten isolierten Körbchen, bestäubt werden, und 15 Pflanzen für freie Bestäubung gelassen werden, damit das Ansetzen von Achänen mit dem Pollen der Vaterform

kontrolliert werden kann.

Man beurteilt die Pollensterilität von Pflanzen der Sonnenblume nach der Pollenfertilität und -keimfahigkeit, nach den morphologischen Besonderheiten von Spermien und nach der Fähigkeit von Achänen zum Ansetzen bei der Beständubung der behandelten isolierten Pflanzen mit dem Pollen der unbehandelten väterlischen Form. Die Läbensfähigkeit der Eizelle wird nach der Samenbildung bei behandelten Pflanzen bei freier Bestäubung der väterlichen Form bestimmt.

Es ist wünschenswert, die Behandlung von Pflanzen bei heiterem windstillem Wetter durchzuführen.

Alle Verbindungen dringen in Pflanzengewebe innerhalb von 4 Stunden nach der Behandlung vollständig ein. Bei den atmosphärischen Niederschlägen im Verlaufe dieser vierstündigen Zeitspanne ist es notwendig, die Pflanzen in der VI. Periode der Organogenese wiederholt zu behandeln.
Die Karbonsäurederivate stellt man in an sich bekannter Weise her.

Die Phthalsäureester gewinnt man durch Veresterung des Phthalsäureanhydrids mit entsprechenden Alkoholen (N.I. Lebedev. Khimia i technologia osnovnogo organicheskogo i neftekhimicheskogo sinteza. Moskva, "Khimia", 1981, S. 210). Man stellt 2-Methyl-3-zyklohexylkarbonsäuremethylester durch Kondensation von Piperylen (das bei der erdölchemischen Produktion anfallende Produkt) mit Methylakrylat (Methylakrylat wird bei der Plastherstellung breit verwendet) in Gegenwart von Aluminiumchlorid her (T.Jnukai, Y. Kojima Journal of organic Chemistry, 32, 869,, 1967). Durch Verseifung des oben genannten Esters mit Kalium- Natrium- oder Ammoniumhydroxid stellt man entsprechende Salze der 2-Methyl-3-zyklohexylkarbonsäure her. Das Kalium-, Natrium- bzw. Ammoniumsalz der Benzoe-, p-Hydroxybenzoe- bzw. Salizylsäure erhält man durch ihre Neutralisation mit entsprechenden Hydroxiden.

Zum besseren Verstehen der vorliegenden Erfindung werden folgende konkrete Ausführungsbeispiele angeführt.

Beispiel 1

Pflanzen des Winterweizens Sorte Mironovskaya 808 werden in der V. Periode der Organogenese durch Zerstäubung einer 2%igen wäßrigen Emulsion des Kaliumsalzes von 2-Methyl-3-zyklohexenkarbonsäure mit Hilfe einer Rückenspritze behandelt. Als Emulgiermittel setzt man 0,1 Masse% $C_{12}$--$C_{14}$ - Kalziumalkylbenzolsulfonat zu. Als Adjuvans führt man in die Emulsion 0,01 Masse% Dimethylformamid ein. Der Verbrauch an Präparat beträgt 20 kg/ha. Als Kontrolle dienen Pflanzen, behandelt mit einem Verdünner ohne Sterilisationsmittel. Die Ergebnisse sind in der Tabelle 1 angegeben. Die ähnlichen Ergebnisse sind bei der Behandlung des Winterweizens Sorte Mironovskaya 808 in der VI. Periode der Organogenese erhalten.

Beispiele 2-8

Der Prozeß wird analog zu dem in Beispiel 1 beschriebenen durchgeführt. Als Sterilisationsmittel verwendet man eine 2%ige wäßrige Emulsion von 2-Methyl-3-zyklohexenkarbonsäuremethylester, Ammoniumsalz der 2-Methyl-23-zyklohexenkarbonsäure, Phthalsäuredihexylester, Phthalsäuredibutylester, Phthalsäuredipropylester, Phthalsäurediisobutylester, Phthalsäurediäthylester. Die Ergebnisse sind in der Tabelle 1 angeführt.

Die ähnlichen Ergebnisse sind bei der Behandlung des Weizens Sorte Mironovskaya 808 in der VI. Periode der Organogenese erhalten.

Tabelle 1

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 37,7 | 0,0 | 40,4 | 100,0 |
| 2. | Beispiel 1 | 3,2 | 91,5 | 38,6 | 95,5 |
| 3. | Beispiel 2 | 0,0 | 100,0 | 30,1 | 74,5 |
| 4. | Beispiel 3 | 0,6 | 98,4 | 39,2 | 97,0 |
| 5. | Beispiel 4 | 4,2 | 88,9 | 38,2 | 94,5 |
| 6. | Beispiel 5 | 0,0 | 100,0 | 31,7 | 78,5 |
| 7. | Beispiel 6 | 5,0 | 86,8 | 39,0 | 96,5 |
| 8. | Beispiel 7 | 0,2 | 99,5 | 37,7 | 93,3 |
| 9. | Beispiel 8 | 0,5 | 98,7 | 39,8 | 98,5 |

Beispiele 9-13

Pflanzen des Winterweizens Sorte Polesskaya-70 behandelt man in der V. Periode der Organogenese durch Zerstäubung einer 2%igen wäßrigen Emulsion von Phthalsäurediäthylester, Phthalsäurediallylester, Phthalsäuredihexylester, Kaliumsalz der 2-Methyl-3-zyklohexenkarbonsäure, Ammoniumsalz der 2-Methyl-3-zyklohexenkarbonsäure mit Hilfe einer Rückenspritze. Die Emulsion enthält 0,01 Masse% Tetrahydrofuran und 0,1 Masse% $C_{12}$ -$C_{14}$ -Kalziumalkylbenzolsulfonat.

Der Verbrauch an Präparat beträgt 16 kg/ha. Als Kontrolle dienen Pflanzen, behandelt mit dem Verdünner ohne Sterilisationsmittel.

Die Prüfergebnisse sind in der Tabelle 2 angegeben. Die ähnlichen Ergebnisse sind bei der Behandlung des Winterweizens Sorte Polesskaya-70 in der VI. Periode der Organogenese erhalten.

Tabelle 2

| lfd. Nr. | Beispiel Nr. | Kornzahl der Ähre im Isolator | Prozentsatz der Sterilität | Kornzahl der Ähre bei freier Bestäubung | Prozentsatz des Ansetzens bei freier Bestäubung |
|---|---|---|---|---|---|
| 1. | Kontrolle | 34,3 | 0,0 | 37,8 | 100,0 |
| 2. | Beispiel 9 | 0,2 | 99,4 | 36,8 | 97,4 |
| 3. | Beispiel 10 | 6,2 | 82,0 | 35,6 | 94,1 |
| 4. | Beispiel 11 | 0,1 | 99,7 | 36,0 | 95,2 |
| 5. | Beispiel 12 | 0,0 | 100,0 | 35,8 | 94,7 |
| 6. | Beispiel 13 | 3,7 | 89,2 | 36,9 | 97,6 |

Beispiel 14-17

Pflanzen des Winterweizens Sorte Priboi werden in der V. und VI. Periode der Organogenese (nach Kupermann) mit einer 2%igen wäßrigen Emulsion von Kaliumsalz der 2-Methyl-3-zyklohexenkarbonsäure, 2-Methyl-3-zyklohexenkarbonsäuremethylester, Phthalsäuredipropylester, Phthalsäurediisobutylester behandelt. Die Emulsion enthält 0,01 Masse% Dimethylsulfoxid und 0,1 Masse% $C_{12}$-$C_{14}$ -Kalziumalkylbenzolsulfonat. Der Verbrauch an Präparat beträgt 12 kg/ha. Als

Kontrolle dienen Pflanzen, behandelt mit einem Verdünner ohne Sterilisationsmittel.

Die Prüfergebnisse sind in der Tabelle 3 angegeben.

Tabelle 3

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 32,1 | 0,0 | 36,8 | 100,0 |
| 2. | Beispiel 14 | 0,0 | 100,0 | 35,1 | 95,4 |
| 3. | Beispiel 15 | 0,0 | 100,0 | 34,8 | 94,6 |
| 4. | Beispiel 16 | 5,6 | 82,6 | 32,6 | 88,6 |
| 5. | Beispiel 17 | 0,0 | 100,0 | 33,7 | 91,6 |

Beispiele 18-22

Pflanzen des Winterweizens Sorte Kharkovskaya 81 werden in der V. und VI. Periode der Organogenese (nach Kupermann) mit einer 2%igen wäßrigen Emulsion von Natriumsalz der 2-Methyl-3-zyklohexenkarbonsäure, Phthalsäuredihexylester, Ammoniumsalz der 2-Methyl-3-zyklohexenkarbonsäure, Phthalsäuredibutylester, Phthalsäurediallylester behandelt. Die Emulsion enthält 0,01 Masse% Dodezylsulfat und 0,1 Masse% $C_{12}$-$C_{14}$ -Kalziumalkylbenzolsulfonat. Der Verbrauch an Präparat beträgt 12 kg/ha.

Die Prüfergebnisse sind in der Tabelle 4 angeführt. Als Kontrolle dienten Pflanzen, behandelt ähnlich wie in Beispiel 1.

Tabelle 4

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 31,8 | 0,0 | 33,9 | 100,0 |
| 2. | Beispiel 18 | 0,2 | 99,4 | 32,6 | 96,2 |
| 3. | Beispiel 19 | 0,0 | 100,0 | 30,8 | 90,8 |
| 4. | Beispiel 20 | 0,0 | 100,0 | 31,7 | 93,5 |
| 5. | Beispiel 21 | 0,0 | 100,0 | 28,6 | 84,4 |
| 6. | Beispiel 22 | 3,1 | 90,3 | 30,6 | 90,3 |

Beispiele 23 - 29

Pflanzen des Sommerweizens Sorte Moskovskaya 35 werden in der V. Periode der Organogenese (nach Kupermann) mit einer 1%igen wäßrigen Emulsion von Kaliumsalz der 2-Methyl-3-zyklohexenkarbonsäure, 2-Methyl-3-zyklohexenkarbonäthylester, Phthalsäuredipropylester, Phthalsäurediallylester, Phthalsäurediisobutylester, Kaliumsalz der Benzoesäure behandelt. Die Emulsion enthält 0,01 Masse% Dimethylsulfoxid und 0,1 Masse% $C_{12}$-$C_{14}$-Kalziumalkylbenzolsulfonat. Der Verbrauch an Präparat beträgt 10 kg/ha. Als Kontrolle dienen Pflanzen, behandelt mit einem Verdünner ohne Sterilisationsmittel.

Die Prüfergebnisse sind in der Tabelle 5 angeführt. Die ähnlichen Ergebnisse sind bei der Behandlung des Sommerweizens Sorte Moskovskaya 35 in der VI. Periode der Organogenese erhalten.

Tabelle 5

| lfd. Nr. | Beispiel Nr. | Kornzahl der Ähre im Isolator | Prozentsatz der Sterilität | Kornzahl der Ähre bei freier Bestäubung | Prozentsatz des Ansetzens der freier Bestäubung |
|---|---|---|---|---|---|
| 1 | 2 | 3 | 4 | 5 | 6 |
| 1. | Kontrolle | 27,5 | 0,0 | 33,2 | 100,0 |
| 2. | Beispiel 23 | 0,0 | 100,0 | 30,8 | 92,8 |

Fortsetzung der Tabelle 5

| 1 | 2 | 3 | 4 | 5 | 6 |
|---|---|---|---|---|---|
| 3. | Beispiel 24 | 0,0 | 100,0 | 29,6 | 89,2 |
| 4. | Beispiel 25 | 0,6 | 97,9 | 31,2 | 93,9 |
| 5. | Beispiel 26 | 1,2 | 95,6 | 28,6 | 86,1 |
| 6. | Beispiel 27 | 0,3 | 98,9 | 31,1 | 94,0 |
| 7. | Beispiel 28 | 0,0 | 100,0 | 31,8 | 95,8 |
| 8. | Beispiel 29 | 7,2 | 73,8 | 33,0 | 99,4 |

Beispiele 30-33

Pflanzen des Sommerweizens Sorte Botanicheskaya 4 werden in der V. Periode der Organogenese (nach Kupermann) mit einer 1%igen wäßrigen Emulsion von Phthalsäuredibutylester, Phthalsäuredipropylester, Natriumsalz der 2-Methyl-3-zyklohexenkarbonsäure, 2-Methyl-3-zyklohexenkarbonsäuremethylester behandelt. Die Emulsion enthält 0,01 Masse% Tetrahydrofuran und 0,1 Masse% $C_{12}$-$C_{14}$-Kalziumalkylbenzolsulfonat. Der Verbrauch an Präparat beträgt 8 kg/ha. Als Kontrolle dienen Pflanzen, behandelt mit einem Verdünner ohne Sterilisationsmittel.

Die Prüfergebnisse sind in der Tabelle 6 angeführt. Die ähnlichen Ergebnisse sind bei der Behandlung des Sommerweizens Sorte Botanicheskaya 4 in der VI. Periode der Organogenese erhalten.

Tabelle 6

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 32,8 | 0,0 | 37,4 | 100,0 |
| 2. | Beispiel 30 | 0,2 | 99,4 | 30,6 | 81,8 |
| 3. | Beispiel 31 | 0,5 | 98,5 | 31,5 | 84,2 |
| 4. | Beispiel 32 | 1,0 | 97,0 | 32,9 | 88,0 |
| 5. | Beispiel 33 | 0,0 | 100,0 | 34,2 | 91,4 |

Beispiele 34-36

Pflanzen des Sommerweizens Sorte Rodina werden in der V. und VI. Periode der Organogenese (nach Kupermann) mit einer 1%igen wäßrigen Emulsion von Ammoniumsalz der 2-Methyl-3-zyklohexenkarbonsäure, Phthalsäuredihexylester, Phthalsäurediisobutylester behandelt. Die Emulsion enthält 0,01 Masse% Dodezylsulfat und 0,1 Masse% $C_{12}$-$C_{14}$--Kalziumalkylbenzolsulfonat. Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle 7 angeführt.

Tabelle 7

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 30,3 | 0,0 | 36,6 | 100,0 |
| 2. | Beispiel 34 | 0,0 | 100,0 | 30,8 | 84,1 |
| 3. | Beispiel 35 | 0,0 | 100,0 | 33,6 | 91,8 |
| 4. | Beispiel 36 | 0,0 | 100,0 | 31,7 | 86,6 |

Beispiele 37-42

Pflanzen Tritikale der Sorte PRAG-109 werden in der V. Periode der Organogenese (nach Kupermann) mit einer 1%igen wäßrigen Emulsion von Phthalsäuredibutylester, Phthalsäurediäthylester, Phthalsäuredihexylester, Phthalsäurediisobutylester, Kaliumsalz der 2-Methyl-3-zyklohexenkarbonsäure, 2-Methyl-3-zyklohexenkarbonsäuremethylester behandelt. Die Emulsion enthält 0,01 Masse% Dimethylsulfoxid und 0,1 Masse% $C_{12}C_{14}$- Kalziumalkylbenzolsulfonat. Der Verbrauch an Präparat beträgt 10 kg/ha. Als Kontrolle dienen Pflanzen, behandelt mit einem Verdünner ohne Sterilisationsmittel.

Die Prüfergebnisse sind in der Tabelle 8 angegeben. Die ähnlichen Ergebnisse sind bei der Behandlung von Tritikale der Sorte PRAG-109 in der VI. Periode der Organogenese erhalten.

Tabelle 8

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 62,2 | 0,0 | 69,0 | 100,0 |
| 2. | Beispiel 37 | 0,1 | 99,8 | 62,1 | 90,0 |
| 3. | Beispiel 38 | 0,8 | 98,7 | 60,8 | 88,1 |
| 4. | Beispiel 39 | 3,0 | 95,2 | 61,7 | 89,4 |
| 5. | Beispiel 30 | 1,0 | 98,4 | 66,8 | 96,8 |
| 6. | Beispiel 41 | 0,1 | 99,8 | 65,1 | 94,3 |
| 7. | Beispiel 42 | 0,0 | 100,0 | 64,7 | 93,8 |

Beispiele 43-47

Pflanzen Tritikale Sorte Amfidiploid 206 werden in der V.Periode der Organogenese (nach Kupermann) mit einer 1%igen wäßrigen Emulsion von Phthalsäuredipropylester, Phthalsäurediisobutylester, Kaliumsalz der 2-Methyl-3-zyklohexenkarbonsäure, 2-Methyl-3-zyklohexenkarbonsäuremethylester, Ammoniumsalz der 2-Methyl-3-zyklohexenkarbonsäure behandelt. Die Emulsion enthält 0,01 Masse% Tetrahydrofuran und 0,1 Masse% $C_{12}$-$C_{14}$-Kalziumalkylbenzolsulfonat. Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle 9 angegeben. Die ähnlichen Ergebnisse sind bei der Behandlung von Tririkale Sorte Amfiploid 206 in der VI. Periode der Organogenese erhalten.

Tabelle 9

| lfd. Nr. | Beispiel Nr. | Kornzahl der Ähre im Isolator | Prozentsatz der Sterilität | Kornzahl der Ähre bei freier Bestäubung | Prozentsatz des Ansetzens bei freier Bestäubung |
|---|---|---|---|---|---|
| 1. | Kontrolle | 28,6 | 0,0 | 36,4 | 100,0 |
| 2. | Beispiel 43 | 0,0 | 100,0 | 31,8 | 87,3 |
| 3. | Beispiel 44 | 0,0 | 100,0 | 32,5 | 89,3 |
| 4. | Beispiel 45 | 0,1 | 99,7 | 31,8 | 87,3 |
| 5. | Beispiel 46 | 0,0 | 100,0 | 32,6 | 89,6 |
| 6. | Beispiel 47 | 6,8 | 79,7 | 37,5 | 103,1 |

Beispiele 48-55

Pflanzen von tetraploidem Roggen Sorte Belta werden in der V. Periode der Organogenese (nach Kupermann) mit einer 1%igen wäßrigen Emulsion von Kaliumsalz der 2-Methyl-3-zyklohexenkarbonsäure, 2-Methyl-3-zyklohexenkarbonsäuremethylester, Phthalsäuredibutylester, Phthalsäuredihexylester, Phthalsäuredipropylester, Phthalsäurediallylester, Phthalsäurediisobutylester, Kaliumsalz der p-Hydroxysäure behandelt. Die Emulsion enthält 0,01 Masse% Dimethylsuloxid und 0,1 Masse% $C_{12}$-$C_{14}$-Kalziumalkylbenzolsulfonat. Der Verbrauch an Präparat beträgt 6 kg/ha. Als Kontrolle dienen Pflanzen behandelt mit einem Verdünner ohne Sterilisationsmittel.

Die Prüfergebnisse sind in der Tabelle 10 angegeben. Die ähnlichen Ergebnisse sind bei der Behandlung von tetraploidem Roggen Sorte Belta in der VI. Periode der Organogenese erhalten.

Tabelle 10

| lfd. Nr. | Beispiel Nr. | Kornzahl der Ähre im Isolator | Prozentsatz der Sterilität | Kornzahl der Ähre bei freier Bestäubung | Prozentsatz des Ansetzens bei freier Bestäubung |
|---|---|---|---|---|---|
| 1. | Kontrolle | 43,3 | 0,0 | 47,1 | 100,0 |
| 2. | Beispiel 48 | 0,1 | 99,8 | 45,6 | 96,8 |
| 3. | Beispiel 49 | 0,0 | 100,0 | 44,2 | 93,8 |
| 4. | Beispiel 50 | 0,0 | 100,0 | 43,1 | 91,5 |
| 5. | Beispiel 51 | 0,2 | 99,5 | 45,9 | 97,4 |
| 6. | Beispiel 52 | 0,0 | 100,0 | 40,8 | 86,6 |
| 7. | Beispiel 53 | 0,3 | 99,7 | 41,6 | 88,3 |
| 8. | Beispiel 54 | 0,0 | 100,0 | 40,4 | 85,8 |
| 9. | Beispiel 55 | 2,8 | 93,5 | 56,2 | 119,2 |

Beispiele 56-59

Pflanzen von tetraploidem Roggen Sorte Ukrainskaya werden in der V. Periode der Organogenese (nach Kupermann) mit einer wäßrigen Emulsion von Ammoniumsalz der 2-Methyl-3--zyklohexenkarbonsäure, Phthalsäurediäthylester, Kaliumsalz der Benzoesäure, Phthalsäurediisobutylester behandelt. Die Emulsion enthält 0,01 Masse% Dimethylformamid und 0,1 Mas-

se% $C_{12}$-$C_{14}$-Kalziumalkylbenzolsulfonat. Der Verbrauch an Präparat beträgt 6 kg/ha. Als Kontrolle dienen Pflanzen, behandelt mit einem Verdünner ohne Sterilisationsmittel. Die Prüfergebnisse sind in der Tabelle 11 angeführt. Die ähnlichen Ergebnisse sind bei der Behandlung von tetraploidem Roggen Sorte Ukrainskaya in der VI. Periode der Organogenese erhalten.

Tabelle 11

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 28,0 | 0,0 | 36,8 | 100,0 |
| 2. | Beispiel 56 | 0,0 | 100,0 | 32,1 | 87,2 |
| 3. | Beispiel 57 | 0,0 | 100,0 | 30,7 | 83,4 |
| 4. | Beispiel 58 | 4,2 | 85,0 | 35,8 | 97,3 |
| 5. | Beispiel 59 | 0,0 | 100,0 | 34,7 | 94,2 |

Beispiele 60-67

Pflanzen von diploidem Roggen Sorte Chulpan werden in der V. Periode der Organogenese (nach Kupermann) mit einer 1%igen wäßrigen Emulsion von Kaliumsalz der 2-Methyl-3-zyklohexenkarbonsäure, 2-Methyl-3-zyklohexenkarbonsäuremethylester, Kaliumsalz der Salizylsäure, Phthalsäurediallylester, Phthalsäurediisobutylester, Phthalsäuredipropylester, Phthalsäuredihexylester, Phthalsäuredibutylester. Die Emulsion enthält 0,01 Masse% Tetrahydrofuran und 0,1 Masse% $C_{12}$-$C_{14}$-Kalziumalkylbenzolsulfonat. Der Verbrauch an Präparat beträgt 8 kg/ha. Als Kontrolle dienen Pflanzen, behandelt mit einem Verdünner ohne Sterilisationsmittel.

Die Prüfergebnisse sind in der Tabelle 12 angeführt. Die ähnlichen Ergebnisse sind bei der Behandlung von diploidem Roggen Sorte Chulpan in der VI. Periode der Organogenese erhalten.

Tabelle 12

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 51,2 | 0,0 | 56,8 | 100,0 |
| 2. | Beispiel 60 | 0,0 | 100,0 | 55,2 | 97,1 |
| 3. | Beispiel 61 | 0,0 | 100,0 | 51,0 | 89,8 |
| 4. | Beispiel 62 | 10,4 | 79,7 | 50,4 | 88,7 |
| 5. | Beispiel 63 | 0,3 | 99,4 | 53,7 | 94,5 |
| 6. | Beispiel 64 | 0,5 | 99,0 | 52,2 | 91,9 |
| 7. | Beispiel 65 | 0,0 | 100,0 | 53,2 | 93,6 |
| 8. | Beispiel 66 | 0,0 | 100,0 | 57,0 | 100,3 |
| 9. | Beispiel 67 | 0,0 | 100,0 | 50,5 | 88,9 |

Beispiele 68-73

Pflanzen von diploidem Roggen Sorte Kharkovskaya 55 werden in der V. und VI. Periode der Organogenese (nach Kupermann) mit einer 1%igen wäßrigen Emulsion von Phthalsäuredibutylester, Phthalsäurediisobutylester, Phthalsäurediallylester, Phthalsäuredihexylester, 2-Methyl-3-zyklohexenkarbonsäuremethylester, Natriumsalz der 2-Methyl-3-zyklohexenkarbonsäure behandelt. Die Emulsion enthält 0,01 Masse% Dimethylformamid und 0,1 Masse% $C_{12}C_{14}$- Kalziumalkylbenzolsulfonat.

Der Verbrauch an Präparat beträgt 6 kp/ha. Als Kontrolle dienen Pflanzen, behandelt mit einem Verdünner ohne Sterilisationsmittel.

Die Prüfergebnisse sind in der Tabelle 13 angeführt.

Tabelle 13

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 47,4 | 0,0 | 52,4 | 100,0 |
| 2. | Beispiel 68 | 0,0 | 100,0 | 48,6 | 92,7 |
| 3. | Beispiel 69 | 0,2 | 99,6 | 50,8 | 96,9 |
| 4. | Beispiel 70 | 0,1 | 99,8 | 51,2 | 97,7 |
| 5. | Beispiel 71 | 0,0 | 100,0 | 49,7 | 94,8 |
| 6. | Beispiel 72 | 0,0 | 100,0 | 48,0 | 91,6 |
| 7. | Beispiel 73 | 0,0 | 100,0 | 50,1 | 95,6 |

Beispiele 74-75

Pflanzen von diploidem Roggen Sorte Belorusskaya 23 werden in der V. und VI. Periode der Organogenese (nach Kupermann) mit einer 1%igen wäßrigen Emulsion von Phthalsäuredibutylester, Kaliumsalz der 2-Methyl-3-zyklohexenkarbonsäure behandelt. Die Emulsion enthält 0,01 Masse% Dodezylsulfat und 0,1 Masse% $C_{12}$-$C_{14}$-Kalziumalkylbenzolsulfonat.

Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle 14 angeführt.

Tabelle 14

| lfd. Nr. | Beispiele Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 40,7 | 0,0 | 44,8 | 100,0 |
| 2. | Beispiel 74 | 0,0 | 100,0 | 42,5 | 94,9 |
| 3. | Beispiel 75 | 0,0 | 100,0 | 43,0 | 95,0 |

Beispiele 76-81

Pflanzen von diploidem Roggen Sorte Voskhod 2 werden in der V. Periode der Organogenese (nach Kupermann) mit einer 1%igen wäßrigen Emulsion von Phthalsäurediäthylester, Phthalsaurediisobutylester, Kaliumsalz der 2-Methyl-3-zyklohexenkarbonsäure, Ammoniumsalz der 2-Methyl-3-zyklohexenkarbonsäure, 2-Methyl-3-zyklohexenkarbonsäuremethylester, Phthalsaurediallylester behandelt. Die Emulsion enthält 0,01 Masse% Dodezylsulfat und 0,1 Masse% $C_{12}$-$C_{14}$-Kalziumalkylbenzolsulfonat. Der Verbrauch an Präparat beträgt 10 kg/ha. Als Kontrolle dienen Pflanzen, behandelt mit einem Verdünner ohne Sterilisationsmittel.

Die Prufergebnisse sind in der Tabelle 15 angeführt. Die ählichen Ergebnisse sind bei der Behandlung von diploidem Roggen Sorte Voskhod 2 in der VI. Periode der Organogenese erhalten.

Tabelle 15

| lfd. Nr. | Beispiele Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 49,8 | 0,0 | 54,6 | 100,0 |
| 2. | Beispiel 76 | 0,2 | 99,6 | 53,4 | 97,8 |
| 3. | Beispiel 77 | 0,0 | 100,0 | 52,8 | 96,7 |
| 4. | Beispiel 78 | 0,1 | 99,8 | 52,2 | 95,6 |
| 5. | Beispiel 79 | 0,0 | 100,0 | 51,7 | 95,0 |
| 6. | Beispiel 80 | 0,0 | 100,0 | 50,2 | 91,9 |
| 7. | Beispiel 81 | 0,8 | 98,4 | 53,5 | 97,9 |

Beispiele 82-88

Pflanzen von diploidem Roggen Sorte Gibrid 1861/79 werden in der V. Periode der Organogenese (nach Kupermann) mit einer 1%igen wäßrigen Emulsion von Phthalsäurediisobutylester, Kaliumsalz der 2-Methyl-3-zyklohexenkarbonsäure, 2--Methyl-3-zyklohexenkarbonsäuremethylester, Ammoniumsalz der 2-Methyl-3-zyklohexenkarbonsäure, Phthalsäurediallylester, Phthalsäuredihexylester, Ammoniumsalz der p-Hydroxybenzoesäure behandelt. Die Emulsion enthält 0,01 Masse% Dimethylsulfoxid und 0,1 Masse% $C_{12}$-$C_{14}$-Kalziumalkylbenzolsulfonat. Der Verbrauch an Präparat beträgt 6 kg/ha. Als Kontrolle dienen Pflanzen, behandelt mit einem Verdünner ohne

Sterilisationsmittel.

Die Prüfergebnisse sind in der Tabelle 16 angeführt. Die ähnlichen Ergebnisse sind bei der Behandlung von diploidem Roggen Sorte Gibrid 1861/79 in der VI. Periode der Organogenese erhalten.

Tabelle 16

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1. | Kontrolle | 54,0 | 0,0 | 62,8 | 100,0 |
| 2. | Beispiel 82 | 0,6 | 98,9 | 57,1 | 90,9 |
| 3. | Beispiel 83 | 0,2 | 99,7 | 56,7 | 90,2 |
| 4. | Beispiel 84 | 0,0 | 100,0 | 51,2 | 81,5 |
| 5. | Beispiel 85 | 0,0 | 100,0 | 57,8 | 92,0 |
| 6. | Beispiel 86 | 0,0 | 100,0 | 59,6 | 95,0 |
| 7. | Beispiel 87 | 0,0 | 100,0 | 56,4 | 89,8 |
| 8. | Beispiel 88 | 0,8 | 98,5 | 68,9 | 109,7 |

Beispiele 89-96

Pflanzen der Hirse Sorte Mironovskoe 94 werden in der V. Periode der Organogenese (nach Kupermann) mit einer 1%igen wäßrigen Emulsion von Kaliumsalz der 2-Methyl-3-zyklohexenkarbonsäure, 2-Methyl-3-zyklohexenkarbonsäuremethylester, Phthalsäuredihexylester, Phthalsäuredibutylester, Phthalsäuredipropylester, Natriumsalz der p-Hydroxybenzoesäure, Phthalsäurediäthylester, Phthalsäurediallylester behandelt. Die Emulsion enthält 0,01 Masse% Dimethylformamid und 0,1 Masse% $C_{12}$-$C_{14}$-Kalziumalkylbenzolsulfonat. Der Verbrauch an Präparat beträgt 10 kg/ha. Als Kontrolle dienen Pflanzen, behandelt mit einem Verdünner ohne Sterilisationsmittel. Die Prüfergebnisse sind in der Tabelle 17 angeführt. Die ähnlichen Ergebnisse sind bei der Behandlung der Hirse Sorte Mironovskoe 94 in der VI. Periode der Organogenese erhalten.

Tabelle 17

| lfd. Nr. | Beispiel Nr. | Kornzahl der Rispe im Isolator | Prozentsatz der Sterilität | Kornzahl der Rispe bei freier Bestäubung | Prozentsatz des Ansetzens der Körner bei freier Bestäubung |
|---|---|---|---|---|---|
| 1. | Kontrolle | 320,5 | 0,0 | 379,5 | 100,0 |
| 2. | Beispiel 89 | 0,0 | 100,0 | 304,3 | 80,2 |
| 3. | Beispiel 90 | 0,0 | 100,0 | 327,6 | 86,3 |
| 4. | Beispiel 91 | 0,0 | 100,0 | 311,5 | 82,1 |
| 5. | Beispiel 92 | 0,0 | 100,0 | 351,4 | 92,6 |
| 6. | Beispiel 93 | 0,0 | 100,0 | 308,7 | 81,3 |
| 7. | Beispiel 94 | 0,0 | 100,0 | 400,7 | 105,6 |
| 8. | Beispiel 95 | 0,0 | 100,0 | 352,5 | 92,6 |
| 9. | Beispiel 96 | 0,0 | 100,0 | 335,2 | 88,3 |

Beispiele 97-102

Pflanzen der Hirse Sorte K-9693 Kormovoe I werden in der V. Periode der Organogenese (nach Kupermann) mit einer 1%igen wäßrigen Emulsion von Ammoniumsalz der 2-Methyl-3-zyklohexenkarbonsäure, Phthalsäuredipropylester, Phthalsäuredibutylester, Phthalsäurediisobutylester, 2-Methyl-3-zyklohexenkarbonsäuremethylester, Phthalsäuredihexylester behandelt. Die Emulsion enthält 0,01 Masse% Dodezylsulfat und 0,1 Masse% $C_{12}$-$C_{14}$-Kalziumalkylbenzolsulfonat. Der Verbrauch an Präparat beträgt 8 kg/ha. Als Kontrolle dienen Pflanzen, behandelt mit einem Verdünner ohne Sterilisationsmittel. Die Prüfergebnisse sind in der Tabelle 18 angeführt. Die ähnlichen Ergebnisse sind bei der Behandlung der Hirse Sorte K-9693 Kormovoe I in der VI. Periode der Organogenese erhalten.

Tabelle 18

| lfd. Nr. | Beispiel Nr. | Kornzahl der Rispe im Isolator | Prozentsatz der Sterilität | Kornzahl der Rispe bei freier Bestäubung | Prozentsatz des Ansetzens der Körner bei freier Bestäubung |
|---|---|---|---|---|---|
| 1. | Kontrolle | 125,0 | 0,0 | 146,7 | 100,0 |
| 2. | Beispiel 97 | 0,0 | 100,0 | 121,6 | 82,9 |
| 3. | Beispiel 98 | 0,0 | 100,0 | 130,7 | 89,1 |
| 4. | Beispiel 99 | 0,0 | 100,0 | 127,9 | 87,9 |
| 5. | Beispiel 100 | 0,0 | 100,0 | 110,4 | 75,3 |
| 6. | Beispiel 101 | 0,0 | 100,0 | 127,8 | 87,1 |
| 7. | Beispiel 102 | 0,0 | 100,0 | 136,6 | 93,1 |

Beispiele 103-116

Pflanzen der Sonnenblume Sorte Peredovik werden in der V. Periode der Organogenese (nach Kupermann) mit einer 0,5%igen wäßrigen Emulsion von Phthalsäuredibutylester, Phthalsäurediäthylester, Kaliumsalz der 2-Methyl-3-zyklohexenkarbonsäure, Natriumsalz der 2-Methyl-3-zyklohexenkarbonsäure sowie mit einer 0,05%igen wäßrigen Emulsion von 2-Methyl-3-zyklohexenkarbonsäuremethylester behandelt. Die Emulsion enthält 0,01 Masse% Dimethylsulfoxid und 0,1 Masse% $C_{12}$-$C_{14}$-Kalziumalkylbenzolsulfonat. Die Sonnenblume Linie VK-119 werden mit einer 0,2%igen wäßrigen Emulsion von Phthalsäuredibutylester, 0,1%igen wäßrigen Emulsion von Phthalsäurediäthylester, Kaliumsalz der 2-Methyl-3-zyklohexenkarbonsäure, 1%igen wäßrigen Emulsion von Natriumsalz der 2-Methyl-3-zyklohexenkarbonsäure und 0,01%igen wäßrigen Emulsion von 2-Methyl-3-zyklohexenkarbonsäuremethylester behandelt. Die Emulsion enthält 0,01 Masse% Dimethylformamid und 0,1 Masse% $C_{12}$-$C_{14}$-Kalziumalkylbenzolsulfonat.

Die Sonnenblume Linie BK-373 werden mit einer 0,2%igen wäßrigen Emulsion von Phthalsäuredibutylester, 0,1%igen wäßrigen Emulsion von Kaliumsalz der 2-Methyl-3-zyklohexylkarbonsäuremethylester und 0,2%igen wäßrigen Emulsion von Phthalsäurediäthylester behandelt. Die Emulsion enthält 0,01

Masse% Dodezylsulfat und 0,1 Masse% $C_{12}$-$C_{14}$-Kalziumalkylbenzolsulfonat.

Als Kontrolle in allen Fällen dienen Pflanzen, behandelt mit einem Verdünner ohne Sterilisationsmittel.

Die Prüfergebnisse sind in der Tabelle 19 angeführt. Die ähnlichen Ergebnisse sind bei der Behandlung der Sonnenblume der genannten Sorten in der VI. Periode der Organogenese erhalten.

Tabelle 19

| lfd. Nr. | Beispiel Nr. | Prozentsatz der Sterilität | Ansetzen der Achänen bei freier Bestäubung | Masse von 1000 Achänen in g | Ölgehalt von Achänen in % |
|---|---|---|---|---|---|
| 1 | 2 | 3 | 4 | 5 | 6 |
| | | Peredovik | | | |
| 1. | Kontrolle | 0,2 | 85,0 | 84,0 | 54,7 |
| 2. | Beispiel 103 | 100,0 | 82,3 | 82,3 | 53,4 |
| 3. | Beispiel 104 | 100,0 | 80,0 | 80,6 | 54,0 |
| 4. | Beispiel 105 | 100,0 | 85,0 | 81,6 | 53,7 |
| 5. | Beispiel 106 | 100,0 | 84,1 | 82,3 | 51,9 |
| 6. | Beispiel 107 | 100,0 | 83,8 | 83,7 | 54,0 |
| | | Linie BK-119 | | | |
| 1. | Kontrolle | 2,0 | 85,0 | 60,0 | 51,0 |
| 2. | Beispiel 108 | 100,0 | 83,5 | 59,0 | 51,2 |
| 3. | Beispiel 109 | 100,0 | 82,5 | 55,0 | 51,2 |
| 4. | Beispiel 110 | 100,0 | 85,5 | 61,9 | 51,5 |
| 5. | Beispiel 111 | 100,0 | 85,0 | 61,1 | 53,4 |
| 6. | Beispiel 112 | 100,0 | 85,0 | 54,0 | 55,1 |
| | | Linie BK-373 | | | |
| 1. | Kontrolle | 0,4 | 70,4 | 58,1 | 49,8 |
| 2. | Beispiel 113 | 100,0 | 61,5 | 55,8 | 45,9 |
| 3. | Beispiel 114 | 100,0 | 62,9 | 57,8 | 48,8 |
| 4. | Beispiel 115 | 100,0 | 65,7 | 57,6 | 49,3 |
| 5. | Beispiel 116 | 100,0 | 64,6 | 57,4 | 46,8 |

Fortsetzung der Tabelle 19

| lfd. Nr. | Beispiel Nr. | Wachstumenergie,% | Präparat in Masse% | Verbrauch an Präparat, kg/ha |
|---|---|---|---|---|
| 1 | 2 | 7 | 8 | 9 |
| 1. | Kontrolle | 100,0 | - | - |
| 2. | Beispiel 103 | 100,0 | 1,0 | 6,0 |
| 3. | Beispiel 104 | 100,0 | 1,0 | 6,0 |
| 4, | Beispiel 105 | 100,0 | 1,0 | 6,0 |
| 5. | Beispiel 106 | 100,0 | 1,0 | 6,0 |
| 6. | Beispiel 107 | 100,0 | 0,05 | 0,3 |
| | | Linie BK-119 | | |
| 1. | Kontrolle | 100,0 | - | - |
| 2. | Beispiel 108 | 100,0 | 0,2 | 1,2 |
| 3. | Beispiel 109 | 100,0 | 0,1 | 0,6 |

Fortsetzung der Tabelle 19

| 1 | 2 | 7 | 8 | 9 |
|---|---|---|---|---|
| 4. | Beispiel 110 | 100,0 | 0,1 | 0,6 |
| 5. | Beispiel 111 | 100,0 | 1,0 | 6,0 |
| 6. | Beispiel 112 | 100,0 | 0,01 | 0,06 |
| | | Linie BK-373 | | |
| 1. | Kontrolle | 100,0 | - | - |
| 2. | Beispiel 113 | 100,0 | 0,2 | 1,2 |
| 3. | Beispiel 114 | 100,0 | 0,1 | 0,6 |
| 4. | Beispiel 115 | 100,0 | 0,01 | 0,06 |
| 5. | Beispiel 116 | 100,0 | 0,2 | 1,2 |

Beispiel 117-126

Pflanzen des Winterweizens Sorte Mironovskaya 808 werden in der V. Periode der Organogenese (nach Kupermann) mit einer 2%igen wäßrigen Emulsion eines Gemisches aus Phthalsäurediäthylester mit Kaliumsalz der Salizylsäure (Verhältnis 1:1), mit einer 2%igen wäßrigen Emulsion eines Gemisches aus Phthalsäuredipropylester mit Kaliumsalz der Benzoesäure (Verhältnis 1:1), mit einer 2%igen wäßrigen Emulsion eines Gemisches aus Phthalsäuredibutylester und Kaliumsalz von p-Hydroxybenzoesäure (Verhaltnis 1:1) behandelt.

Die Emulsion enthält 0,01 Masse% Tetrahydrofuran und 0,1 Masse% $C_{12}$-$C_{14}$-Kalziumalkylbenzolsulfonat. Der Verbrauch an Präparat beträgt 12 kg/ha.

Pflanzen des Sommerweizens Moskovskaya werden mit einer 1,0%igen wäßrigen Emulsion eines Gemisches aus Phthalsäurediisobutylester mit Kaliumsalz der Benzoesäure (Verhältnis 1:1), mit einer 1,0%igen wäßrigen Emulsion eines Gemisches aus Phthalsäuredihexylester mit Kaliumsalz der p-Hydroxybenzoesäure (Verhältnis 1:1), mit einer 1,0%igen wäßrigen Emulsion eines Gemisches aus Phthalsäurediallylester mit Kaliumsalz der Benzoesäure behandelt. Die Emulsion enthält 0,01 Masse% Dimethylsulfoxid und 0,1 Masse% $C_{12}$-$C_{14}$-Kalziumalkylbenzolsulfonat. Der Verbrauch an Präparat beträgt 6 kg/ha.

Pflanzen von diploidem Roggen Chulpan werden mit einer 1%igen wäßrigen Emulsion eines Gemisches aus Phthalsäuredihexylester mit Kaliumsalz der p-Hydroxybenzoesäure, mit einer 1%igen wäßrigen Emulsion eines Gemisches aus Phthalsäurediallylester mit Kaliumsalz der Salizylsäure (Verhältnis 1:1), mit einer 1%igen wäßrigen Emulsion eines Gemisches aus Phthalsäuredibutylester mit Kaliumsalz der Benzoesäure (Verhältnis 1:1), mit einer 1%igen wäßrigen Emulsion eines Gemisches aus Phthalsäurediisobutylester und Phthalsäurediäthylester (Verhältnis 1:1) behandelt. Die Emulsion enthält 0,01 Masse% Tetrahydrofuran und 0,1 Masse% $C_{12}$-$C_{14}$-Kalziumalkylbenzolsulfonat. Der Verbrauch an Präparat beträgt 6 kg/ha.

Pflanzen Tritikale Sorte PRAG-109 werden mit einer 1%igen wäßrigen Emulsion eines Gemisches aus Phthalsäuredibutylester mit Kaliumsalz der Salizylsäure (Verhältnis 1:1), mit einer wäßrigen Emulsion eines Gemisches aus Phthalsäuredihexylester mit Kaliumsalz der Benzoesäure (Verhältnis 1:1), mit einer 1%igen wäßrigen Emulsion aus Phthalsäurediallylester mit Kaliumsalz der p-Hydroxybenzoesäure (Verhältnis 1:1) behandelt. Die Emulsion enthält 0,01 Masse% Terahydrofuran und 0,1 Masse% $C_{12}$-$C_{14}$-Kalziumalkylbenzolsulfonat. Der Verbrauch an Präparat beträgt 8 kg/ha.

In allen Fällen dienen als Kontrolle Pflanzen, behandelt mit einem Verdünner ohne Sterilisationsmittel. Die Prüfergebnisse sind in der Tabelle 20 angeführt. Die ähnlichen Ergebnisse sind bei der Behandlung der genannten Pflanzen in der VI. Periode der Organogenese erhalten.

Tabelle 20

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| | | Winterweizen Mironovskaya 808 | | | |
| 1. | Kontrolle | 38,3 | 0,0 | 41,0 | 100,0 |
| 2. | Beispiel 117 | 0,0 | 100,0 | 39,2 | 95,6 |
| 3. | Beispiel 118 | 0,0 | 100,0 | 38,8 | 94,6 |
| 4. | Beispiel 119 | 0,0 | 100,0 | 40,7 | 99,2 |
| | | Sommerweizen Moskovskaya 35 | | | |
| 1. | Kontrolle | 27,1 | 0,0 | 27,5 | 100,0 |
| 2. | Beispiel 120 | 0,0 | 100,0 | 24,8 | 90, 1 |

Fortsetzung der Tabelle 20

| 1 | 2 | 3 | 4 | 5 | 6 |
|---|---|---|---|---|---|
| 3. | Beispiel 121 | 0,0 | 100,0 | 26,8 | 97,5 |
| 4. | Beispiel 122 | 0,0 | 100,0 | 27,0 | 98,1 |
| | | Diploider Roggen Chulpan | | | |
| 1. | Kontrolle | 57,1 | 0,0 | 64,7 | 100,0 |
| 2. | Beispiel 123 | 0,0 | 100,0 | 60,2 | 93,0 |
| 3. | Beispiel 124 | 0,0 | 100,0 | 61,4 | 94,9 |
| 4. | Beispiel 125 | 0,0 | 100,0 | 59,7 | 92,3 |
| 5. | Beispiel 126 | 0,0 | 100,0 | 58,6 | 90,6 |
| | | PRAG-109 | | | |
| 1. | Kontrolle | 62,2 | 0,0 | 69,0 | 100,0 |
| 2. | Beispiel 127 | 0,0 | 100,0 | 62,7 | 90,9 |
| 3. | Beispiel 128 | 0,0 | 100,0 | 66,5 | 96,4 |
| 4. | Beispiel 129 | 0,0 | 100,0 | 67,0 | 97,1 |

Gewerbliche Verwertbarkeit

Das anmeldungsgemäße Verfahren findet Anwendung in der Selektion und im Samenbau zur Erzielung hochproduktiver Sorten von Hybriden und landwirtschaftlichen Kulturen.

PATENTANSPRÜCHE

1. Verfahren zur Sterilisation der Staubbeutel von Pflanzen durch ihre Behandlung mit einem Sterilisationsmittel in Verbindung mit einem Verdünner in der fünften und/oder sechsten Periode der Organogenese, dadurch g e k e n n z e i c h n e t, daß als Sterilisationsmittel Karbonsäurederivate der allgemeinen Formel A-COOR, worin R für K, Na, $NH_4$, Alkyl mit 1 bis 6 Kohlenstoffatomen Allyl steht.

A 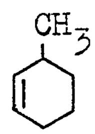 , 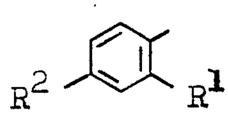 bedeutet, worin

$R^1$ für COOH, COOR, H, OH steht, $R^2$ für H, OH steht, oder deren Gemische verwendet werden.

2. Verfahren nach Anspruch 1, dadurch g e k e n n z e i c h n e t, daß die genannten Karbonsäurederivate in Verbindung mit einem Verdünner in Form einer 0,01 - bis 2%igen wäßrigen Emulsion verwendet werden.

3. Verfahren nach Anspruch 1-2, dadurch g e k e n n z e i c h n e t, daß als mit dem Sterilisationsmittel zu behandelnde Pflanzen Gräser und Sonnenblume dienen.

4. Verfahren nach Anspruch 1 bis 3, dadurch g e k e n n z e i c h n e t, daß man zur Erzielung eines hohen Sterilisationsgrades von Staubbeuteln unter ungünstigen klimatischen Bedingungen eine wiederholte Behandlung von Pflanzen mit dem Sterilisationsmittel in der fünften und/oder sechsten Periode der Organogenese durchführt.

# INTERNATIONAL SEARCH REPORT

International Application No PCT/SU 88/00057

**I. CLASSIFICATION OF SUBJECT MATTER** (if several classification symbols apply, indicate all) [6]

According to International Patent Classification (IPC) or to both National Classification and IPC

$IPC^4$ A01N 37/08,37/10,37/36

**II. FIELDS SEARCHED**

Minimum Documentation Searched [7]

| Classification System | Classification Symbols |
|---|---|
| $IPC^4$ | A01N 37/08,37/10,37/36;A01H 1/04 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | EP, A2, 0133155 (CIBA-GEIGY AG) 13 February 1985 (13.02.85) | 1 |
| A | GB, A, 2102782 (Ciba-Geigy (UK) Limited), 09 February 1983 (09.02.83) | 1 |
| A | SU, A1, 640711 (Vsesojuzny ordena Lenina i ordena Druzhby narodov nauchno-issledovatelsky institut rastenievodstva im N.N. Vavilova Vsesojuznoi ordena Lenina akademii selskokhzyaistvennykh nauk im V.I. Lenina et al.) 08 January 1979 (08.01.79) | 1-4 |
| A | SU, A1, 950248 (Institut bioorganicheskoi khimii im M.M. Shemyakina AN SSSR et al.) 15 August 1982 (15.08.82) | 1-4 |
| A | Selektsia i semenovedstvo, Nr. 4, 1982, (Kolos, Moscow), P.V. Chiryaev "Industsirovanie muzhskoi sterilnosti u podsolnechnika rastvorami gibberellina, pages 43,44 ./. | 1,3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 10 October 1988 (10.10.88) | 16 December 1988 (16.12.88) |
| **International Searching Authority** | **Signature of Authorized Officer** |
| ISA/SU | |

International Application No. PCT/SU 88/00057

**FURTHER INFORMATION CONTINUED FROM THE SECOND SHEET**

| | | |
|---|---|---|
| A | SU, A3, 931087 (Rom and Haas Company) 23 May 1982 (23.05.82) | 1 |

------------

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers .........., because they relate to subject matter not required to be searched by this Authority, namely:

2.☐ Claim numbers .........., because they relate to parts of the international application that do not comply with the prescribed requirements to such an extent that no meaningful international search can be carried out, specifically:

3.☐ Claim numbers .........., because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

**Remark on Protest**

☐ The additional search fees were accompanied by applicant's protest.

☐ No protest accompanied the payment of additional search fees.